Europäisches Patentamt

(19) European Patent Office

Office européen des brevets

(11) Numéro de publication : **0 098 765**
**B1**

(12) **FASCICULE DE BREVET EUROPÉEN**

(45) Date de publication du fascicule du brevet :
12.11.86

(21) Numéro de dépôt : **83401230.4**

(22) Date de dépôt : **15.06.83**

(51) Int. Cl.⁴ : **H 02 G 15/013**, H 02 G 15/113

(54) Manchon pour protéger l'épissure de câbles électriques ou téléphoniques.

(30) Priorité : **30.06.82 FR 8211467**
**18.02.83 FR 8302641**

(43) Date de publication de la demande :
**18.01.84 Bulletin 84/03**

(45) Mention de la délivrance du brevet :
**12.11.86 Bulletin 86/46**

(84) Etats contractants désignés :
**AT BE CH DE GB IT LI LU NL SE**

(56) Documents cités :
**WO-A-81 /014 87**
**DE-A- 2 158 993**
**DE-A- 2 203 064**
**DE-A- 2 311 942**
**DE-A- 2 338 363**
**DE-A- 2 615 314**
**FR-A- 2 397 733**

(73) Titulaire : **ETABLISSEMENTS MOREL - ATELIERS ELECTROMECANIQUES DE FAVIERES (Société Anonyme)**
**Favières**
**F-28170 Chateauneuf-en-Thymerais (FR)**

(72) Inventeur : **Morel, André**
**Favières**
**F-28170 Châteauneuf-en-Thymerais (FR)**
Inventeur : **Morel, Jacques**
**Favières**
**F-28170 Châteauneuf-en-Thymerais (FR)**

(74) Mandataire : **Bouju, André**
**Cabinet Bouju 38 avenue de la Grande Armée**
**F-75017 Paris (FR)**

## Description

La présente invention concerne un manchon en matière plastique pour protéger l'épissure de câbles électriques ou téléphoniques.

On a décrit dans le document FR-A-2 469 782 de la Demanderesse un manchon pour protéger l'épissure de câbles électriques ou téléphoniques comprenant deux demi-coquilles assemblées par leurs bords adjacents autour de l'épissure, ces bords adjacents comportant une gorge définissant en position d'assemblage un canal, des moyens étant prévus pour injecter dans ce canal une matière pâteuse établissant l'étanchéité entre ces bords adjacents.

De plus, les extrémités opposées du manchon comportent des mâchoires destinées à être serrées sur le câble lors de l'assemblage des deux demi-coquilles. Au moins deux de ces mâchoires définissent entre elles une chambre qui communique avec le canal précité.

Lorsqu'on injecte dans le canal précité, une matière d'étanchéité, telle qu'une résine polymérisable, cette matière pénètre dans la chambre comprise entre les deux mâchoires en entourant annulairement les extrémités de câbles serrées par ces mâchoires. Cette matière réalise ainsi une excellente étanchéité du manchon, à la fois au niveau des bords longitudinaux assemblés des deux demi-coquilles du manchon et au niveau des mâchoires.

Le but de la présente invention est d'améliorer encore cette étanchéité.

Suivant l'invention, ce manchon de protection est caractérisé en ce que la chambre précitée communique avec le canal par l'intermédiaire d'une gorge ménagée tout autour d'une mâchoire adjacente à cette chambre, pratiquée au fond du logement dans lequel est emboîtée cette mâchoire.

Lorsqu'on injecte la matière d'étanchéité dans le canal ménagé entre les bords assemblés des deux demi-coquilles du manchon, cette matière pénètre dans la gorge ménagée tout autour de la mâchoire précitée, puis remplit la chambre.

On forme ainsi un véritable joint d'étanchéité autour de la mâchoire qui permet de renforcer l'étanchéité obtenue par la chambre adjacente à cette mâchoire qui est remplie de matière d'étanchéité.

Comme décrit dans le premier certificat d'addition rattaché au brevet français précité, chaque mâchoire de serrage du câble comprend deux éléments de mâchoire emboîtés l'un sur l'autre autour du câble, chaque élément de mâchoire comportant une série de rainures s'étendant suivant des arcs de cercle concentriques dont les rayons sont adaptés à différents diamètres de câbles.

Conformément à la présente invention, de préférence le bord de l'un des éléments de mâchoire destiné à être emboîté dans le bord adjacent de l'autre élément de mâchoire comprend deux parties rectilignes de longueurs égales présentant l'une un profil convexe et l'autre un profil concave et destinées à recevoir respectivement le profil concave et le profil convexe des parties correspondantes du bord de l'autre élément de mâchoire.

Ces profils convexe et concave permettent d'assurer une excellente étanchéité entre les bords adjacents des éléments de mâchoire serrés autour du câble.

Dans la réalisation décrite dans le brevet FR-A-2 469 782, le canal ménagé entre les bords adjacents des demi-coquilles du manchon et la chambre comprise entre les mâchoires présente une surface intérieure lisse à laquelle la résine d'étanchéité n'adhère pas toujours suffisamment.

Après l'assemblage des demi-coquilles, on introduit à l'intérieur du manchon de l'air sous pression afin d'éviter tout risque de pénétration d'humidité ou autre fluide agressif à l'intérieur du manchon.

Du fait de cette surpression d'air qui peut dépasser 1 bar, pour éviter tout risque de fuite vers l'extérieur, on est obligé d'assembler les bords des demi-coquilles au moyen d'un grand nombre de vis de serrage.

La mise en place de ces vis de serrage est longue et rend ainsi le montage des manchons onéreux.

Pour remédier à cet inconvénient, selon une version préférée de l'invention, les bords adjacents des demi-coquilles du manchon ainsi que la chambre comportent des parties en relief séparées par des parties en creux destinées à être remplies par la matière pâteuse d'étanchéité.

Ces parties en relief et en creux augmentent considérablement la surface de contact entre la matière d'étanchéité, la surface interne du canal et celle de la chambre, de sorte que l'adhérance de la matière d'étanchéité avec ces surfaces est nettement améliorée. Cette manière d'étanchéité permet ainsi d'obtenir une liaison suffisamment solide entre les parties assemblées du manchon, de sorte qu'on peut limiter le nombre des vis de serrage des deux demi-coquilles et réduire ainsi le coût de leur assemblage.

D'autres particularités et avantages de l'invention apparaîtront encore dans la description ci-après.

Aux dessins annexés donnés à titre d'exemples non limitatifs :

la figure 1 est une vue en plan montrant l'intérieur de l'extrémité d'une demi-coquille d'un manchon conforme à l'addition,

la figure 2 est une vue en coupe longitudinale d'un manchon conforme à l'invention, montrant les mâchoires serrées autour du câble,

la figure 3 est une vue en coupe suivant le plan III-III de la figure 2,

la figure 4 est une vue en plan des deux éléments d'une mâchoire utilisée dans le manchon conforme à l'invention,

la figure 5 est une vue en coupe suivant le plan V-V de la figure 4,

la figure 6 est une vue en plan d'une réglette graduée utilisée lors du montage des mâchoires et du câble à l'intérieur du manchon conforme à l'invention,

la figure 7 est une vue en plan des éléments d'une mâchoire adaptée au passage de quatre câbles,

la figure 8 est une vue de côté avec coupe longitudinale partielle d'une demi-coquille, d'un autre manchon conforme à l'invention,

la figure 9 est une de dessus de cette demi-coquille,

la figure 10 est une vue de dessous de cette demi-coquille,

la figure 11 est une vue de côté partielle montrant les deux demi-coquilles assemblées du manchon,

la figure 12 est une vue en coupe des deux demi-coquilles assemblées suivant le plan XII-XII de la figure 9,

la figure 13 est une vue en coupe des deux demi-coquilles assemblées suivant le plan XIII-XIII de la figure 9,

la figure 14 est une vue en coupe des deux demi-coquilles assemblées suivant le plan XIV-XIV de la figure 9,

la figure 15 est une vue en coupe des deux demi-coquilles assemblées suivant le plan XV-XV de la figure 9,

la figure 16 est une vue à plus grande échelle du détail XVI de la figure 12,

la figure 17 est une vue analogue à la figure 16, montrant l'assemblage des bords adjacents des deux demi-coquilles,

la figure 18 est une vue en perspective éclatée d'une demi-coquille montrant un autre mode de réalisation de l'étanchéité.

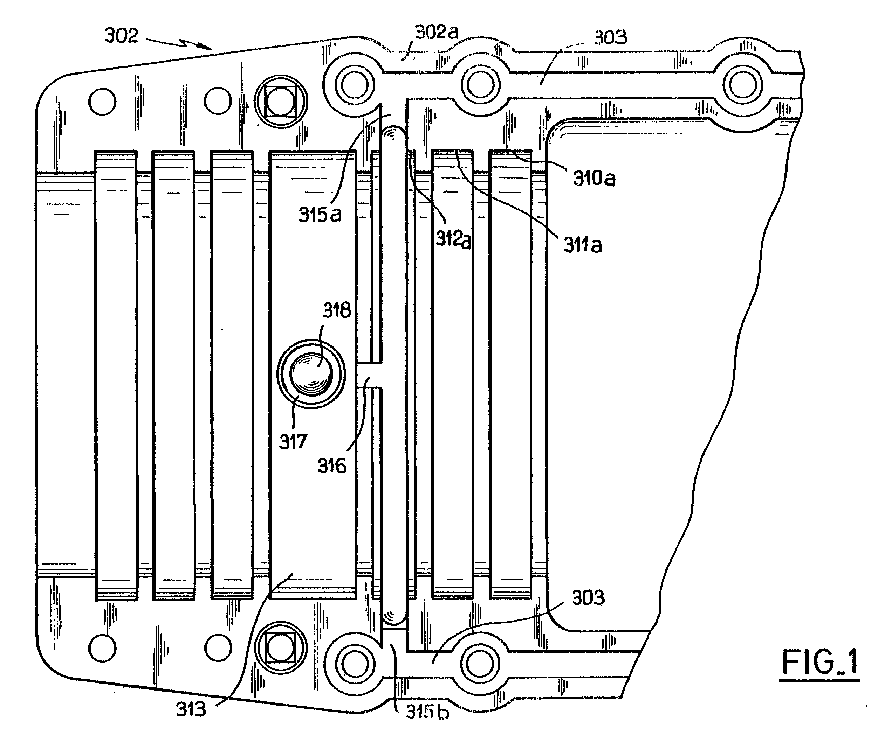

Dans la réalisation des figures 1 à 3, le manchon pour protéger l'épissure d'un câble 300 comprend deux demi-coquilles 301, 302 dont les bords longitudinaux 301a, 302a comportent une gorge définissant en position d'assemblage de ces bords, un canal 303 destiné à être rempli par une matière pâteuse de façon à réaliser l'étanchéité entre ces bords 301a, 302a.

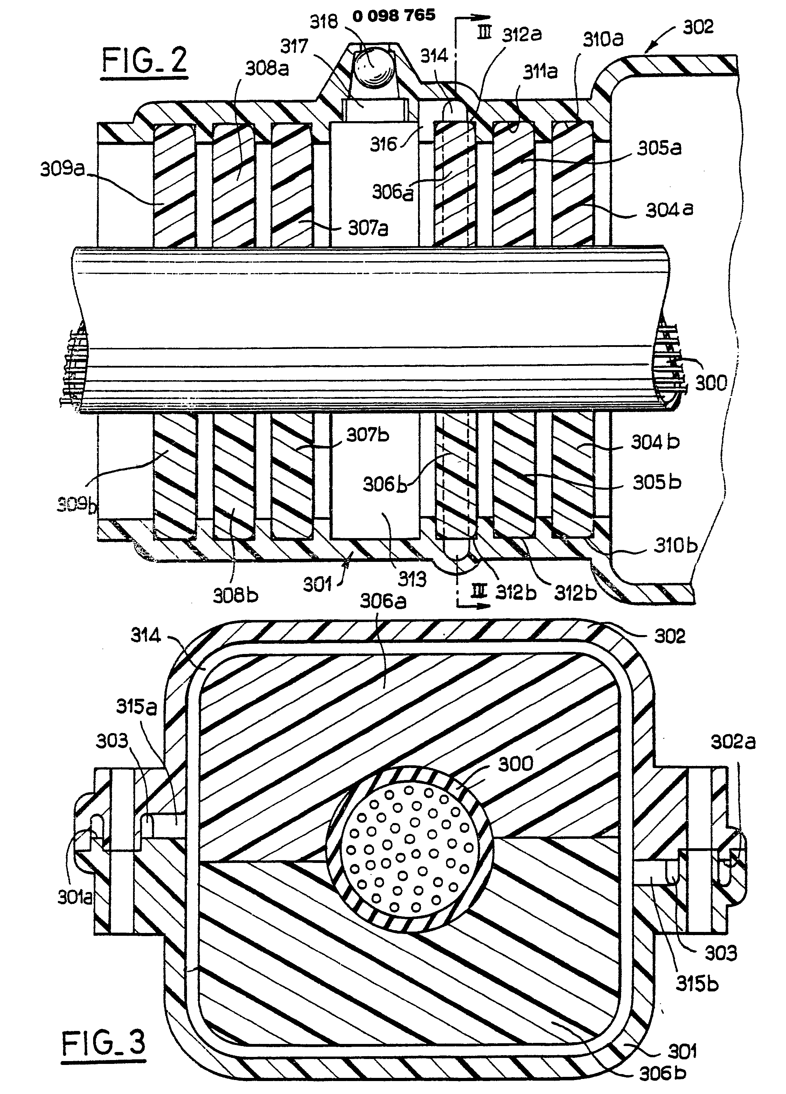

Le câble 300 (voir figure 2) est fixé axialement à chacune des extrémités du manchon par des mâchoires de serrage constituées chacune par deux éléments de mâchoire 304a, 304b, 305a, 305b, 306a, 306b, 307a, 307b, 308a, 308b, 309a, 309b emboîtés dans des logements 310a, 310b, 311a, 311b, 312a, 312b etc... ménagés dans les demi-coquilles 301, 302.

On voit également sur la figure 2 que les mâchoires 306a, 306b et 307a, 307b définissent entre elles une chambre 313 destinée à être remplie par la matière d'étanchéité qui est injectée dans le canal 303 ménagé entre les bords longitudinaux des demi-coquilles 301, 302.

Cette chambre 313 communique avec le canal 303 par l'intermédiaire d'une gorge 314 (voir figures 2 et 3) ménagée tout autour de la mâchoire 306a, 306b adjacente à la chambre 313, cette gorge 314 étant ménagée au fond des logements 312a, 312b dans lesquels sont emboîtés les éléments de mâchoire 306a, 306b.

On voit sur les figures 1 et 3 que cette gorge 314 communique avec le canal 303 défini entre les bords adjacents des demi-coquilles 301, 302 par deux passages 315a, 315b transversaux au canal 303 ménagés sur les bords opposés 301a, 302b des demi-coquilles et disposés en regard du logement 312a, 312b dans lequel est emboîtée la mâchoire 306a, 306b.

Par ailleurs, la gorge 314 communique avec la chambre 313 au moyen d'un passage 316 orienté suivant l'axe du manchon et débouchant dans le logement 312a de l'élément de mâchoire 306a.

Dans la chambre 313 débouche une ouverture 317 pratiquée dans la demi-coquille 302 qui s'ouvre à l'extérieur du manchon. Dans cette ouverture 317 est logée une bille 318 jouant le rôle du clapet.

Lors de l'injection de la matière d'étanchéité dans le canal 303 ménagé entre les bords longitudinaux d'assemblage des demi-coquilles 301, 302, cette matière pénètre tout d'abord dans la gorge 314 par les passages latéraux 315a, 315b, puis remplit la chambre 313 par le passage 316.

La matière d'étanchéité forme ainsi un véritable joint d'étanchéité autour des éléments de mâchoire 306a, 306b qui renforce l'étanchéité assurée en aval de ces derniers par le remplissage en matière d'étanchéité de la chambre 313.

On obtient par conséquent une double garantie d'étanchéité contre la pénétration d'humidité à l'intérieur des extrémités du manchon.

La bille transparente 318 logée dans l'orifice 317 permet, au début du remplissage, à l'air de s'échapper à l'extérieur du manchon, puis lorsque la pression de remplissage désirée est atteinte, cette bille ferme de façon étanche l'orifice 317. Le fait que cette bille 318 soit transparente permet à l'opérateur de contrôler visuellement le remplissage de la chambre 313.

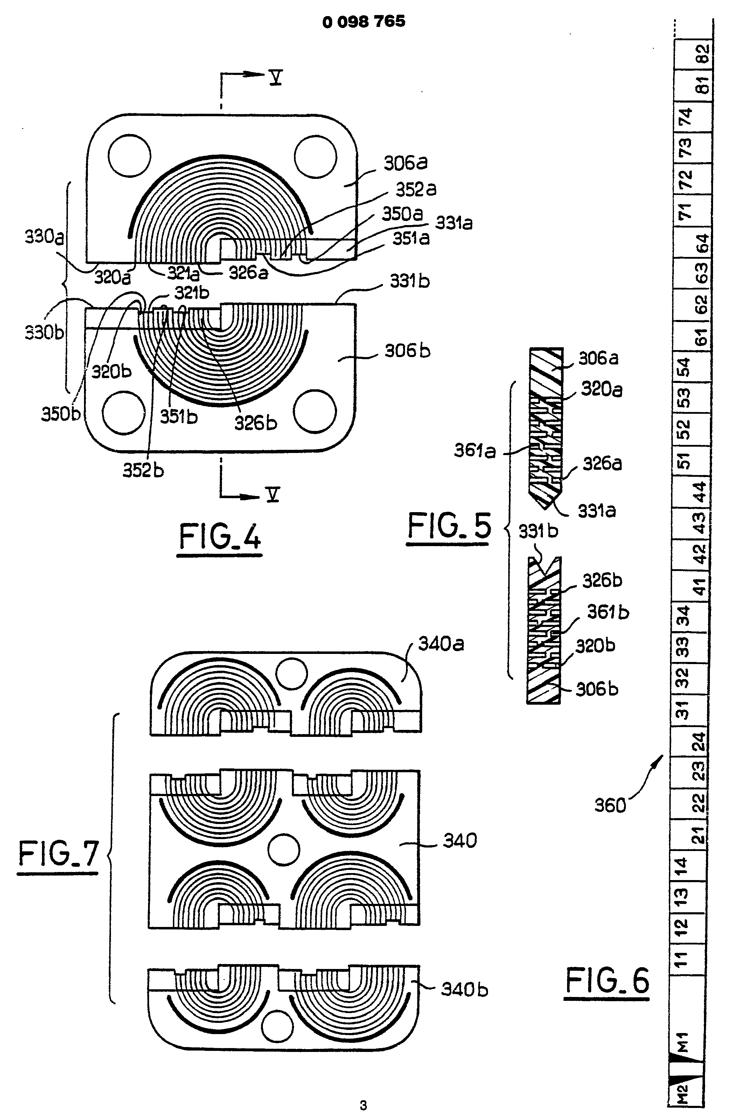

Comme indiqué sur les figures 4 et 5, les éléments de mâchoire 306a, 306b comportent comme décrit dans le premier certificat d'addition FR-A-2 479 545, une série de rainures 320a, 321a ... 326a ; 320b, 321b ... 326b s'étendant suivant des arcs de cercle concentriques adaptés à différents diamètres de câbles et permettant de faciliter le découpage des encoches en arc de cercle destinées à prendre appui autour du câble.

Conformément à la présente invention, le bord de l'un 306a des éléments de mâchoire destiné à être emboîté dans le bord adjacent de l'autre 306b élément de mâchoire comprend deux parties rectilignes de longueurs égales présentant l'une 330a un profil concave, et l'autre 331a un profil convexe destinées à recevoir respectivement le profil convexe 330b et le profil concave 331b des parties correspondantes du bord de l'autre élément de mâchoire.

Dans l'exemple représenté sur les figures 4 et 5, le profil convexe 331a, 330b est défini par un dièdre saillant vers l'extérieur de l'élément de mâchoire et le profil concave 330a, 331b est défini par un dièdre rentrant complémentaire.

Ces profils permettent d'assurer en position d'assemblage, une excellente étanchéité entre les bords adjacents des éléments de mâchoire 306a, 306b.

Lors de la mise en place du câble 300 à l'intérieur du manchon, on découpe les éléments de mâchoire 306a, 306b suivant une rainure en arc de cercle 320a ... 326a ; 320b ... 326b de rayon correspondant à celui du câble.

Pour améliorer l'étanchéité entre les bords adjacents des éléments de mâchoire 306a, 306b, il est avantageux d'appliquer sur ces bords un enduit tel qu'un mastic silicone, compatible avec la matière plastique des éléments de mâchoire 306a, 306b et avec la matière d'étanchéité destinée à remplir la gorge 314 et la chambre 313.

Conformément à une autre caractéristique avantageuse de la présente invention, les bords adjacents des éléments de mâchoire 306a, 306b comportent des encoches transversales 350a, ... 351a ; 350b, ... 351b séparées par des saillies 352a, 352b de même largeur que les encoches. Les bords opposés de ces encoches 350a ... 351b sont situés dans le prolongement de deux rainures de découpage en arc de cercle séparées par une ou plusieurs autres rainures.

Ces encoches 350a ou saillies 352a facilitent le repérage de la rainure en arc de cercle à découper en fonction du diamètre du câble.

Pour mesurer le diamètre d'un câble destiné à être protégé au moyen du manchon conforme à l'invention, on utilise avantageusement une réglette graduée 360 en matière plastique transparente et souple telle que représentée sur la figure 6.

Cette réglette comprend un repère d'origine $M_1$ ou $M_2$ (suivant le type de mâchoire) et des nombres à deux chiffres, 11, 12, 13, 21, 22, 23... Le premier chiffre indique le numéro de l'encoche 350a ou de la saillie 352a des éléments de mâchoire 306a, 306b et le second chiffre indique le numéro de la rainure en arc de cercle 320a ... 326a ou 320b ... 326b de l'encoche ou saillie considérée.

On enroule cette réglette souple 360 autour du câble et on lit le nombre en regard du repère d'origine $M_1$ ou $M_2$. Le nombre lu (par exemple 21) signifie que l'on doit découper la première rainure en arc de cercle de la deuxième encoche ou saillie.

Les encoches telles que 350a et saillies telles que 352a combinés avec la réglette souple 360 facilitent donc le repérage des rainures en arc de cercle à découper et limitent les risques d'erreurs qui pourraient se traduire par une mauvaise étanchéité entre les mâchoires et le câble.

Ainsi, les précédentes dispositions peuvent également être appliquées au cas d'une mâchoire adaptée au passage de plusieurs câbles, telle que celle représentée à la figure 7. Cette mâchoire est composée d'un élément central 340 et de deux éléments d'extrémités 340a, 340b. L'élément 340a définit avec l'élément central 340 deux passages de câbles et l'autre élément 340b définit avec l'élément central 340 deux autres passages de câbles.

Par ailleurs, comme indiqué sur la figure 5, il est avantageux que les cloisons 361a, 361b qui définissent les fonds des rainures 320a, ... 326a ; 320b, ... 326b soient situées à une distance des faces opposées des éléments de mâchoire 306a, 306b successivement petite et grande par rapport à l'une de ces faces.

En effet, cette disposition des cloisons 361a, 361b permet aux éléments de mâchoire 306a, 306b une meilleure déformabilité radiale lorsqu'elles sont serrées sur le câble 300, ce qui permet d'obtenir une excellente étanchéité entre ces éléments de mâchoire et le câble, même lorsque la section de ce dernier n'est pas parfaitement circulaire.

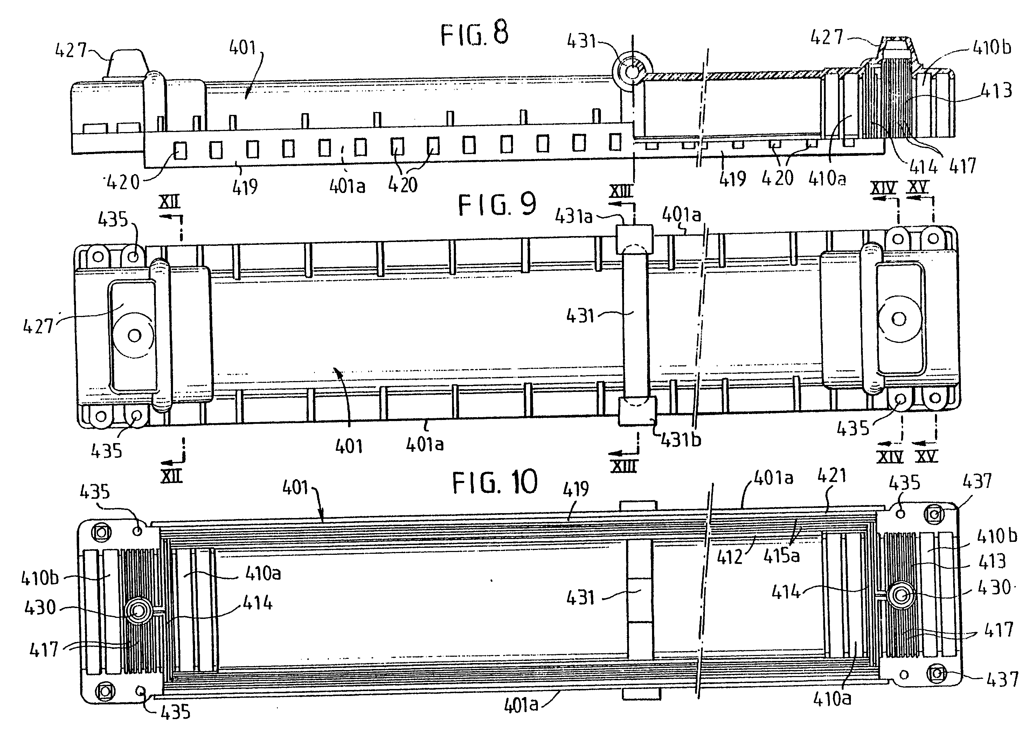

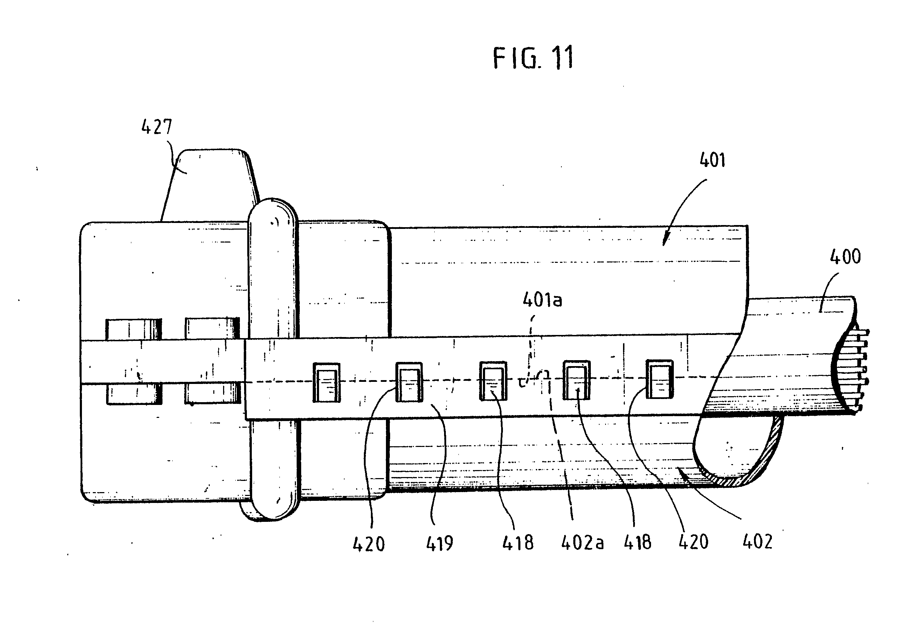

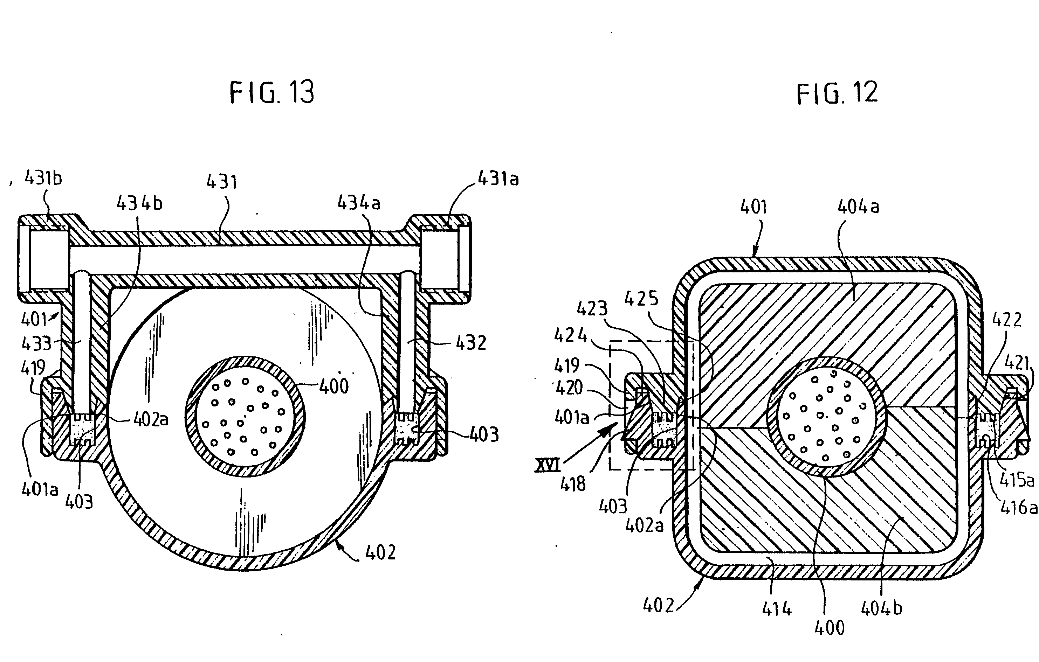

Dans la réalisation des figures 8 à 17, le manchon pour protéger l'épissure d'un câble 400 comprend deux demi-coquilles 401, 402 dont les bords longitudinaux 401a, 402a comportent une gorge définissant en position d'assemblage de ces bords, un canal 403 destiné à être rempli par une matière pâteuse de façon à réaliser l'étanchéité entre ces bords 401a, 402a (voir figures 12, 13 et 16).

Le câble 400 (voir figures 9, 12 et 15) est fixé axialement à chacune des extrémités du manchon par des mâchoires de serrage constituées chacune par deux éléments de mâchoire tels que 404a, 404b et 405a, 405b, emboîtés dans des logements tels que 410a, 410b (voir figures 8 et 10) ménagés dans les demi-coquilles 401, 402.

On voit également sur les figures 8 et 10 que les mâchoires lorsqu'elles sont mises en place dans les logements 410a, 410b définissent entre elles une chambre 413 destinée à être remplie par la matière d'étanchéité qui est injectée dans le canal 403 ménagé entre les bords longitudinaux des demi-coquilles 401, 402.

Cette chambre 413 communique avec le canal 403 par l'intermédiaire d'une gorge 414 (voir figure 10) ménagée près de la mâchoire 404a, 404b adjacente à la chambre 413.

Les mâchoires 404a, 404b et 405a, 405b et leur mode d'emboîtement dans les extrémités des demi-coquilles 401, 402 sont analogues à celles décrites en référence aux figures 3 et 4.

Conformément à la présente invention les bords adjacents 401a, 402a des demi-coquilles 401, 402 ainsi que la chambre 413 comportent des parties en relief séparées par des parties en creux destinées à être remplies par la matière pâteuse d'étanchéité.

Dans la réalisation représentée (voir figures 10, 12, 13 et 16) ces parties en relief sont des nervures 415a, 416a, 417 moulées sur lesdits bords 401a, 402a et sur la surface interne de la chambre 413.

Par ailleurs, comme indiqué sur les figures 8, 11, 12, 13 et 16, les bords adjacents 401a, 402a des demi-coquilles 401, 402 comprennent des moyens d'assemblage par encliquetage.

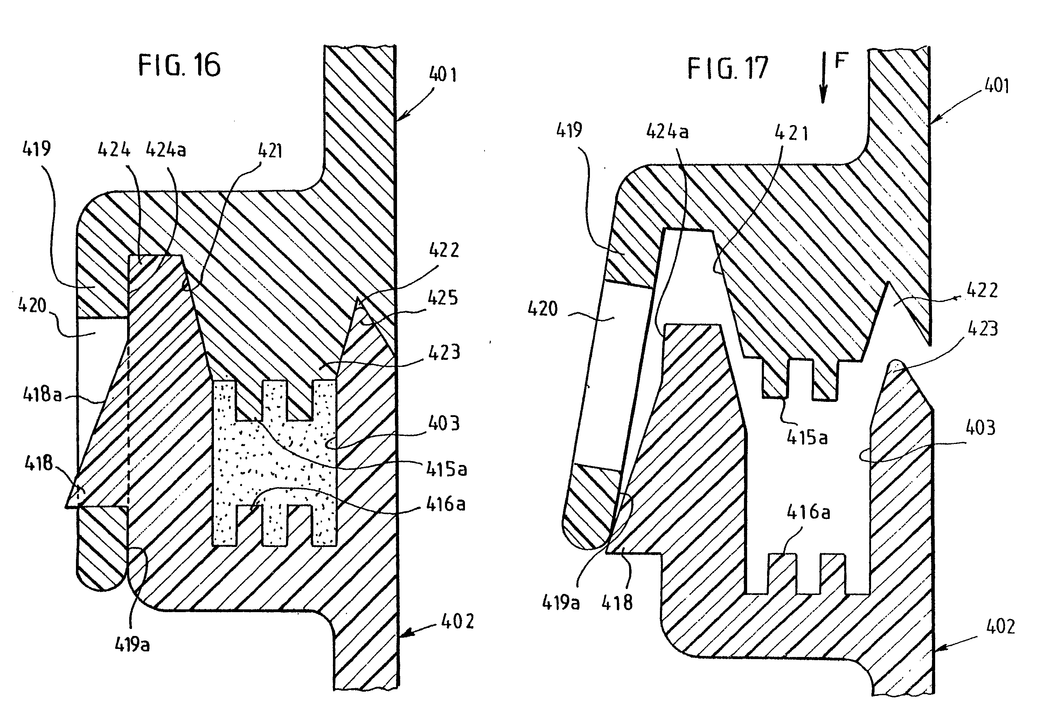

Ces moyens comprennent sur le bord 402a de la demi-coquille 402 une série de becs d'encliquetage 418 faisant saillie vers l'extérieur de la demi-coquille dans une direction (voir figure 16) sensiblement parallèle au plan d'assemblage des deux demi-coquilles 401, 402. Le bord 401a de l'autre demi-coquille 401 comporte une paroi flexible 419 faisant saillie par rapport au plan d'assemblage dans une direction sensiblement perpendiculaire à ce dernier. Cette paroi flexible 419 présente des ouvertures 420 destinées à recevoir les becs d'encliquetage 418.

Les becs d'encliquetage 418 comportent une partie 418a formant rampe d'engagement permettant lors de l'assemblage des deux demi-coquilles 401, 402 une flexion progressive vers l'extérieur de la paroi flexible 419 avant encliquetage de ces becs dans les ouvertures 420 de cette paroi.

La figure 16 montre d'autre part que le bord 401a de la demi-coquille 401 qui comporte la paroi flexible 419 présente deux rainures parallèles 421, 422 séparées par une protubérance 423 dont le sommet porte les nervures 415a. Le bord 402a de l'autre demi-coquille 402 comporte de part et d'autre de la gorge 403 destinée à recevoir la protubérance 423 de l'autre bord 401a, deux lèvres parallèles 424, 425 de sections complémentaires à celles des rainures 421, 422 ménagées sur le premier bord 401a et engagées dans ces dernières.

La face interne 419a de la paroi flexible 419 est située dans le prolongement du flanc extérieur 424a de la rainure adjacente 424.

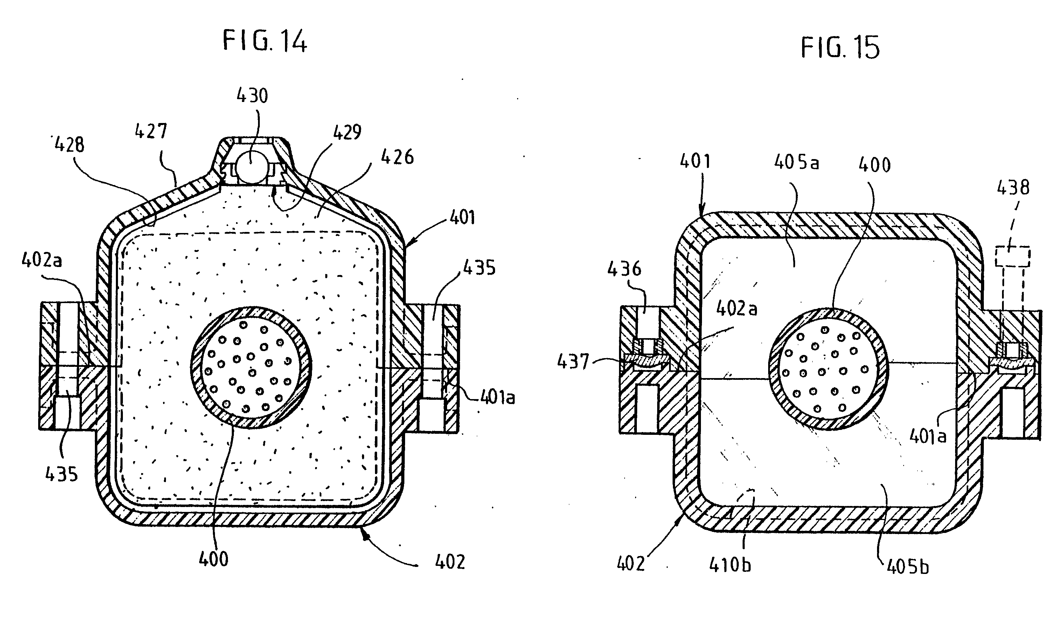

Par ailleurs comme on le voit notamment sur la figure 14, la chambre 413 comprise entre les mâchoires emboîtées dans les logements 410a, 410b et destinée à être remplie de résine d'étanchéité communique avec une cavité 426 formant un bossage 427 sur la surface extérieure de la demi-coquille 401 (voir également la figure 8). Cette cavité 426 présente des flancs 428 qui convergent vers le fond 429 de cette cavité. Ce fond 429 comporte un clapet à bille 430.

Dans la réalisation représentée, les moyens d'injection de la matière d'étanchéité comprennent (voir notamment la figure 13) une tubulure 431 s'étendant à l'extérieur et sur toute la largeur de la demi-coquille 401 et faisant corps avec cette dernière. Cette tubulure 431 est ouverte à ses deux extrémités 431a, 431b et communique par deux canaux 432, 433 ménagés dans les parois latérales opposées 434a, 434b de la demi-coquille 401 avec le canal 403 prévu entre les bords d'assemblage 401a, 402a de celle-ci.

L'une quelconque des extrémités 431a, 431b de cette tubulure 431 peut être raccordée à un dispositif d'injection sous pression, l'autre extrémité de cette tubulure étant destinée à être obturée par un bouchon.

Dans la réalisation représentée, chaque extrémité des demi-coquilles 401, 402 comporte sur son bord d'assemblage 401a, 402a deux trous 435 (voir figures 9 et 10) pour le passage de vis de serrage des deux demi-coquilles. Près de ces deux trous 435 sont prévus deux autres trous 436 (voir également la figure 15).

Le fond des trous 436 ménagés sur le bord 401a de la demi-coquille 401 est obturé par une coupelle métallique 436 reposant sur le bord 402a de l'autre demi-coquille 402. Cette coupelle 437 sert de butée pour une vis 438 destinée à être vissée dans chacun des deux trous 436 lorsqu'on désire désassembler les deux demi-coquilles.

Pour assembler le manchon que l'on vient de décrire on procède comme suit.

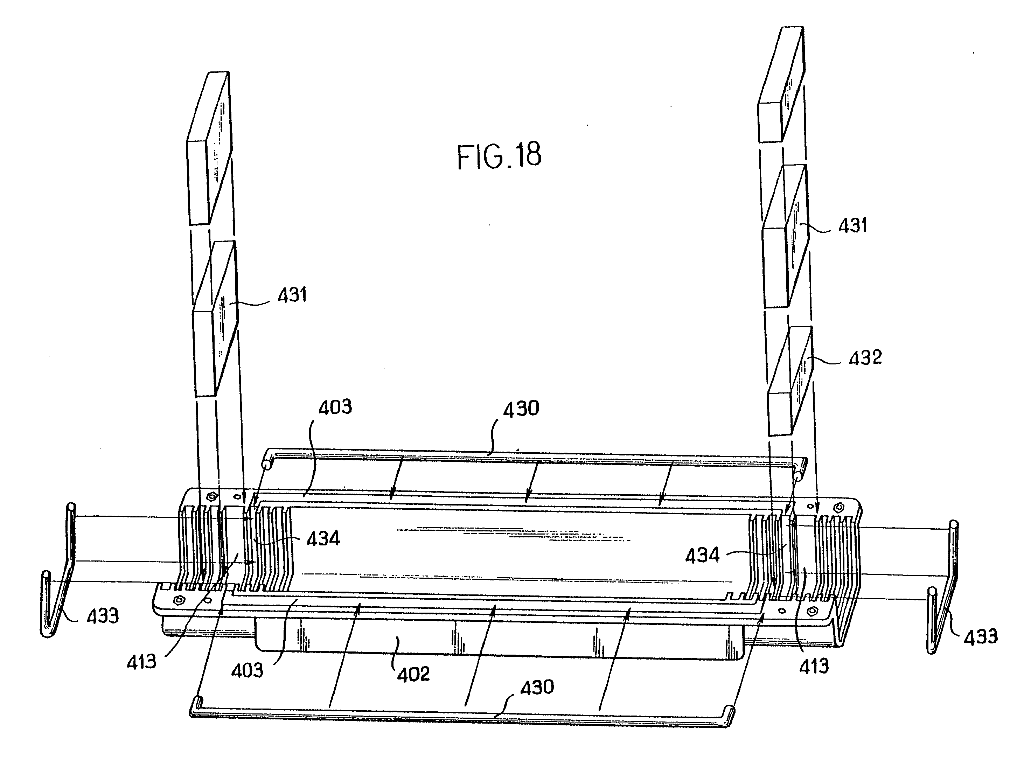

On met tout d'abord les éléments de mâchoire 404a, 404b ; 405a, 405b, etc... dans les logements 410a, 410b etc... prévus aux extrémités opposées de chaque demi-coquille 401, 402, puis on recouvre le câble 400 et son épissure par les deux demi-coquilles 401, 402. On assemble ensuite les bords adjacents 401a, et 402a des demi-coquilles 401, 402. A cet effet, il suffit de presser les deux bords 401a, 402b l'un vers l'autre (voir flèches F de la figure 17), par exemple au moyen d'une pince spécialement prévue à cet effet. Lors de cette opération, la paroi flexible 419 de la demi-coquille 401 glisse sur la rampe 418a des becs 418 en fléchissant vers l'extérieur. En fin de course, les becs 418 s'encliquètent dans les ouvertures 420 de la paroi 419, les lèvres 424 et 425 du bord 402a de la demi-coquille 402 s'emboîtent dans les rainures 421, 422 du bord 401a de la demi-coquille 401 et la protubérance 423 de cette dernière s'engage dans le canal 403 ménagé sur le bord 402a de l'autre demi-coquille 402.

En position d'assemblage, comme indiqué sur la figure 16, les bords adjacents 401a, 402a des demi-coquilles 401, 402 sont solidement verrouillés l'un sur l'autre grâce à l'encliquetage des becs 418 dans les ouvertures 420 de la paroi flexible 419.

Par ailleurs tout glissement latéral relatif des bords 401a, 402b assemblés est évité grâce au triple emboîtement assuré par les deux lèvres 424, 425 et la protubérance 424 dans des rainures ou gorge complémentaires. Par ailleurs, ce triple emboîtement assure déjà une certaine étanchéité entre les bords 401a et 402b, notamment vis-à-vis de la matière d'étanchéité qui est injectée dans le canal interne 403.

Cette matière d'étanchéité peut être injectée dans ce canal 403 par l'extrémité 431a ou 431b de la tubulure 431. Lors de cette injection, cette matière remplit le canal 403, puis la chambre 413 ménagée à chaque extrémité du manchon, entre deux mâchoires de retenue du câble 400.

Les microbulles formées au sein de la matière d'étanchéité, lors de sa polymérisation, s'accumulent près du fond 429 de la cavité 426 ménagée au-dessus de la chambre 413. Grâce à cette cavité 426, ces microbulles, ne risquent pas de se former à l'intérieur du canal 403 ou de la chambre 413 et ainsi compromettre l'étanchéité dans ces derniers.

Grâce aux nervures 415a et 416a faisant saillie à l'intérieur du canal 403 et aux nervures ménagées sur la surface interne de la chambre 413, on améliore considérablement l'adhérence de la matière d'étanchéité. Cette excellente adhérence permet d'améliorer l'étanchéité entre les bords adjacents des demi-coquilles et à l'intérieur de la chambre 413. Cette excellente adhérence de la matière d'étanchéité renforce également la résistance mécanique de l'assemblage entre les bords adjacents des deux demi-coquilles.

Ainsi, l'assemblage des bords des demi-coquilles 401, 402 ne risque pas d'être arraché sous l'effet de la surpression d'air qui est réalisée à l'intérieur du manchon.

De plus, ce renforcement de l'assemblage permet de remplacer ou de diminuer le nombre des vis de serrage utilisées jusqu'à présent par les moyens d'encliquetage décrits plus haut qui facilitent considérablement le montage du manchon.

Ainsi, les nervures 415a, peuvent être remplacées par d'autres parties en relief continues ou discontinues permettant d'augmenter la surface d'adhérence de la matière d'étanchéité.

De plus, pour accroître encore davantage l'adhérence de cette matière d'étanchéité on peut élargir l'extrémité libre des nervures au moyen d'ultrasons, par fusion partielle de la matière plastique ou procédé analogue.

Par ailleurs, les moyens d'assemblage par encliquetage décrits plus haut pourraient être ménagés sur seulement deux bords adjacents des demi-coquilles et dans ce cas, les deux autres bords pourraient être reliés par une bande en matière plastique moulée d'une seule pièce avec les deux demi-coquilles et formant charnière d'articulation de celles-ci.

Ainsi, les deux demi-coquilles pourraient être moulées en même temps dans un moule unique présentant deux cavités de moulage placées côte à côte et reliées par la bande d'articulation précitée.

Bien entendu, dans le cas des manchons de fortes dimensions destinés à un ou plusieurs câbles de forte section, l'assemblage des demi-coquilles s'effectuerait toujours en utilisant des vis de serrage et non par des moyens d'encliquetage. Dans ce cas, les nervures 415a et 416a qui contribuent à améliorer la liaison mécanique entre les demi-coquilles permettent de diminuer le nombre des vis de serrage et par conséquent de réduire le temps de montage.

Par ailleurs, la matière d'étanchéité au lieu d'être injectée à l'état liquide dans le canal 403 et dans la chambre 413 pourrait être remplacée par une matière pâteuse placée directement sous forme de boudins allongés 430 dans la gorge périphérique d'une demi-coquille 402, sous forme de boudins courbés 433 dans la gorge 434 qui relie le canal 403 à la chambre 413, et sous forme de blocs 431, 432 dans la chambre d'extrémité 413 (voir figure 18). Lors de l'assemblage des demi-coquilles, ces boudins allongés pâteux et ces blocs se déforment en épousant le profil intérieur des gorges et des chambres en réalisant ainsi à l'intérieur de celles-ci une étanchéité comparable à celle obtenue par injection de la matière d'étanchéité à l'état liquide.

D'autre part, des moyens d'assemblage par encliquetage pourraient être ménagées sur les parties 422, 425 (voir figure 16) afin d'améliorer encore, si nécessaire, l'efficacité de l'assemblage des deux demi-coquilles 401, 402.

## Revendications

1. Manchon pour protéger l'épissure de câbles, comprenant deux demi-coquilles (301, 302, 401, 402) assemblées par leurs bords adjacents (301a, 302a, 401a, 402a) autour de l'épissure, ces bords adjacents comportant une gorge définissant en position d'assemblage un canal (303, 403), des moyens étant prévus pour introduire dans ce canal une matière pâteuse établissant l'étanchéité entre ces bords adjacents, les extrémités opposées du manchon comportant des mâchoires (304a, 304b ; 305a, 305b ; 306a, 306b ; 307a, 307b ; 404a, 404b ; 405a, 405b), destinées à être serrées sur le câble (300, 400) lors de l'assemblage des deux demi-coquilles, au moins deux de ces mâchoires définissant entre elles une chambre (313, 413) communiquant avec le canal précité, caractérisé en ce que la chambre (313, 413) communique avec le canal (303, 403) par l'intermédiaire d'une gorge (314) pratiquée tout autour d'une mâchoire (306a, 306b) adjacente à cette chambre et ménagée au fond du logement (312a, 312b) dans lequel est emboîtée cette mâchoire.

2. Manchon conforme à la revendication 1, caractérisé en ce que la gorge (314) communique avec le canal (303) défini entre les bords adjacents des demi-coquilles, par deux passages (315a, 315b) transversaux audit canal, ménagés sur les bords opposés (301a, 302a) des demi-coquilles, en regard du logement (312a, 312b) dans lequel est emboîtée la mâchoire (306a, 306b).

3. Manchon conforme à l'une quelconque des revendications 1 ou 2, chaque mâchoire de serrage du câble (300) comprenant deux éléments de mâchoire (306a, 306b) emboîtés l'un sur l'autre autour du câble (300), chaque élément de mâchoire comportant une série de rainures (320a ... 326a ; 320b ... 326b...) s'étendant suivant des arcs de cercle concentriques, adaptés à différents diamètres de câbles, caractérisé en ce que le bord de l'un (306a) des éléments de mâchoire destiné à être emboîté dans le bord adjacent de l'autre (306b) élément de mâchoire, comprend deux parties rectilignes de longueurs égales, présentant l'une (331a, 330b) un profil convexe, et l'autre (330a, 331b) un profil concave destinés à recevoir respectivement le profil concave et le profil convexe des parties correspondantes du bord de l'autre élément de mâchoire.

4. Manchon conforme à la revendication 3, caractérisé en ce que le profil convexe (331a, 330b) est défini par un dièdre saillant vers l'extérieur de l'élément de mâchoire et le profil concave (330a, 331b) est défini par un dièdre rentrant complémentaire.

5. Manchon conforme à l'une quelconque des revendications 2 à 4, caractérisé en ce que les bords adjacents des éléments de mâchoire (306a, 306b) sont collés l'un à l'autre.

6. Manchon conforme à l'une quelconque des revendications 3 à 5, caractérisé en ce que les bords des éléments de mâchoire (306a, 306b)

comportent des encoches transversales (350a, 350b) séparées par des saillies (352a, 352b) de largeurs identiques à ces encoches, les bords opposés de ces encoches en saillie étant situés dans le prolongement de deux rainures (320a, 320b) en arc de cercle, séparées par une ou plusieurs autres rainures.

7. Manchon conforme à l'une quelconque des revendications 2 à 6, caractérisé en ce que les cloisons (361a, 361b) qui définissent les fonds des rainures (320a ... 326a ; 320b ... 326b) sont situées à une distance des faces opposées des éléments de mâchoire (306a, 306b) successivement petite et grande par rapport à l'une de ces faces.

8. Manchon pour protéger l'épissure de câbles, conforme à l'une des revendications 1 à 7, caractérisé en ce que les bords adjacents (401a, 402a) des demi-coquilles (401, 402) ainsi que la chambre (413) comportent des parties en relief (415a, 416a, 417) séparées par des parties en creux destinées à être remplies par la matière pâteuse d'étanchéité.

9. Manchon conforme à la revendication 8, caractérisé en ce que lesdites parties en relief sont des nervures (415a, 416a, 417) moulées sur lesdits bords (401a, 402a) et sur la surface interne de ladite chambre (413).

10. Manchon conforme à l'une des revendications 8 ou 9, caractérisé en ce que les bords adjacents (401a, 402a) des demi-coquilles (401, 402) comprennent des moyens d'assemblage par encliquetage.

11. Manchon conforme à la revendication 10, caractérisé en ce que lesdits moyens comprennent sur le bord (402a) de l'une des demi-coquilles, une série de becs d'encliquetage (418) faisant saillie vers l'extérieur de la demi-coquille (402) dans une direction sensiblement parallèle au plan d'assemblage des deux demi-coquilles (401, 402) et sur le bord (401a) de l'autre demi-coquille une paroi flexible (419) faisant saillie par rapport au plan d'assemblage dans une direction sensiblement perpendiculaire à ce dernier, cette paroi flexible (419) comportant des ouvertures (420) destinées à recevoir les becs d'encliquetage (418).

12. Manchon conforme à la revendication 11, caractérisé en ce que les becs d'encliquetage (418) comportent une partie (418a) formant rampe d'engagement permettant lors de l'assemblage des deux demi-coquilles une flexion progressive vers l'extérieur de la paroi flexible (419) avant encliquetage de ces becs (418) dans les ouvertures (420) de cette paroi (419).

13. Manchon conforme à l'une quelconque des revendications 11 ou 12, caractérisé en ce que le bord (401a) de la demi-coquille (401) qui comporte la paroi flexible (419) présente deux rainures parallèles (421, 422) séparées par une protubérance (423) dont le sommet porte lesdites nervures (415a) et en ce que le bord (402) de l'autre demi-coquille comporte de part et d'autre de la gorge (403) destinée à recevoir la protubérance (423) de l'autre bord, deux lèvres parallèles (424, 425) de sections complémentaires à celles des rainures (421, 422) ménagées sur le premier bord (401a) et destinées à pénétrer dans ces dernières.

14. Manchon conforme à la revendication 13, caractérisé en ce que la face interne (419a) de la paroi flexible (419) est située dans le prolongement du flanc extérieur (424a) de la rainure adjacente (424).

15. Manchon conforme à l'une quelconque des revendications 10 à 14, caractérisé en ce que les moyens d'assemblage par encliquetage sont ménagés sur deux bords adjacents des demi-coquilles et en ce que les deux autres bords sont reliés par une bande en matière plastique moulée d'une seule pièce avec les deux demi-coquilles et formant charnière d'articulation pour celles-ci.

16. Manchon conforme à l'une des revendications 8 à 15, caractérisé en ce que la chambre (413) comprise entre deux mâchoires, destinée à être remplie par la matière d'étanchéité communique avec une cavité (426) formant un bossage (427) sur la surface extérieure de l'une des demi-coquilles.

17. Manchon conforme à la revendication 16, caractérisé en ce que cette cavité (426) présente des flancs (428) qui convergent vers le fond (429) de cette cavité, ce fond comportant un clapet (430).

18. Manchon conforme à l'une des revendications précédentes, caractérisé en ce que les moyens d'injection de la matière d'étanchéité comprennent une tubulure (431) s'étendant à l'extérieur et sur toute la largeur d'une demi-coquille (401) et faisant corps avec cette dernière, cette tubulure étant ouverte à ses deux extrémités (431a, 431b) et communiquant par deux canaux (432, 433) ménagés dans les parois latérales opposées (434a, 434b) de la demi-coquille avec le canal (403) prévu entre les bords d'assemblage (401a, 402a) des demi-coquilles, l'une des extrémités de cette tubulure étant destinée à être raccordée à un dispositif d'injection sous pression et l'autre extrémité de cette tubulure étant destinée à être obturée par un bouchon.

19. Manchon conforme à l'une quelconque des revendications 9 à 18, caractérisé en ce que l'extrémité libre des nervures (415a, 416a, 417) comporte une partie élargie au moyen d'ultrasons ou analogue.

**Claims**

1. Sleeve for protecting cable splices, comprising two half-shells (301, 302, 401, 402) assembled together around the splice by means of their adjacent flanges (301a, 302a, 401a, 402a), these adjacent flanges being provided with a channel which defines a duct (303, 403) in the assembled position, means being provided for introducing material in paste form in this duct, this material ensuring sealing between these adjacent flanges, the opposite ends of the sleeve being provided with jaws (304a, 304b ; 305a, 305b ; 306a, 306b ;

307a, 307b, 404a, 404b ; 405a, 405b) which are intended to be clamped against the cable (300, 400) at the time of assembly of the two half-shells, a chamber (313, 413) which communicates with the duct aforesaid being defined between at least two of these jaws, characterized in that the chamber (313 ; 413) communicates with the duct (303, 403) by means of a channel (314) formed around the entire periphery of a jaw (306a, 306b) which is adjacent to this chamber and formed at the bottom of the recess (312a, 312b) in which this jaw is fitted.

2. Sleeve in accordance with claim 1, characterized in that the channel (314) communicates with the duct (303) defined between the adjacent flanges of the half-shells via two passages (315a, 315b) which are transverse to said duct and formed in the opposite flanges (301a, 302a) of the half-shells opposite to the recess (312a, 312b) in which the jaw (306a, 306b) is fitted.

3. Sleeve in accordance with either of claims 1 or 2, each jaw for clamping the cable (300) being constituted by two jaw elements (306a, 306b) engaged in interfitting relation around the cable (300), each jaw element being provided with a series of grooves (320a ... 326a ; 320b ... 326b...) extending in concentric circular arcs adapted to different cable diameters, characterized in that the flange of one jaw element (306a) which is intended to be engaged in the adjacent flange of the other jaw element (306b) comprises two rectilinear portions of equal length which are provided in one case (331a, 330b) with a convex profile and in the other case (330a, 331b) with a concave profile and which are intended to receive respectively the concave profile and the convex profile of the corresponding portions of the flange of the other jaw element.

4. Sleeve in accordance with claim 3, characterized in that the convex profile (331a, 330b) is defined by an outwardly projecting dihedron of the jaw element and the concave profile (330a, 331b) is defined by a complementary inwardly projecting dihedron.

5. Sleeve in accordance with any one of claims 2 to 4, characterized in that the adjacent edges of the jaw elements (306a, 306b) are bonded to each other.

6. Sleeve in accordance with any one of claims 3 to 5, characterized in that the edges of the jaw elements (306a, 306b) are provided with transverse notches (350a, 350b) separated by projecting lugs (352a, 352b) having widths which are identical with these notches, the opposite edges of these projecting notches being located in the line of extension of two arcuate grooves (320a, 320b) separated by one or a number of other grooves.

7. Sleeve in accordance with any one of claims 2 to 6, characterized in that the partition-walls (361a, 361b) which define the bottom ends of the grooves (320a ... 326a ; 320b ... 326b) are located at a distance from the opposite faces of the jaw elements (306a, 306b) which is successively short and long with respect to one of these faces.

8. Sleeve for protecting cable splices in accordance with any one of claims 1 to 7, characterized in that the adjacent flanges (401a, 402a) of the halfshells (401, 402) as well as the chamber (413) are provided with raised portions (415a, 416a, 417) separated by recessed portions which are intended to be filled with the paste-type sealing material.

9. Sleeve in accordance with claim 8, characterized in that said raised portions are ribs (415a, 416a, 417) molded on said flanges (401a, 402a) and on the internal surface of said chamber (413).

10. Sleeve in accordance with either of claims 8 or 9, characterized in that the adjacent flanges (401a, 402a) of the half-shells (401, 402) comprise snap-action coupling means.

11. Sleeve in accordance with claim 10, characterized in that said means comprise on the flange (402a) of one of the half-shells a series of snap-fastening noses (418) which project outwards from the half-shell (402) in a direction substantially parallel to the plane of assembly of the two half-shells (401, 402) and comprise on the flange (401a) of the other half-shell a flexible wall (419) which projects with respect to the plane of assembly in a direction substantially perpendicular to this latter, this flexible wall (419) being provided with openings (420) for receiving the snap-fastening noses (418).

12. Sleeve in accordance with claim 11, characterized in that the snap-fastening noses (418) have a portion (418a) forming an engagement ramp which permits at the time of assembly of the two half-shells a progressive outward flexural deformation of the flexible wall (419) prior to snap-action engagement of these noses (418) within the openings (420) of this wall (419).

13. Sleeve in accordance with either of claims 11 or 12, characterized in that the flange (401a) of the half-shell (401) which is provided with the flexible wall (419) has two parallel grooves (421, 422) separated by a protuberance (423) whose apex carries said ribs (415a) and that the flange (402) of the other half-shell is provided on each side of the channel (403) for receiving the protuberance (423) of the other flange with two parallel lips (424, 425) having cross-sections which are complementary to those of the grooves (421, 422) formed in the first flange (401a) and intended to penetrate into these latter.

14. Sleeve in accordance with claim 13, characterized in that the internal face (419a) of the flexible wall (419) is located in the line of extension of the external flank (424a) of the adjacent groove (424).

15. Sleeve in accordance with any one of claims 10 to 14, characterized in that the snap-action coupling means are arranged on two adjacent edges of the half-shells and that the other two flanges are joined together by a strip of plastic material which is molded in one piece with the two half-shells and forms a hinge joint for these latter.

16. Sleeve in accordance with any one of claims 8 to 15, characterized in that the chamber (413) formed between two jaws and intended to be filled with sealing material communicates with a cavity (426) forming a boss (427) on the external surface of one of the half-shells.

17. Sleeve in accordance with claim 16, characterized in that this cavity (426) has sides (428) which converge towards the end portion (429) of this cavity, this end portion being fitted with a ball-valve (430).

18. Sleeve in accordance with any one of the preceding claims, characterized in that the means for injecting sealing material comprise a tube (431) which extends externally and along the entire width of one half-shell (401) and is integral with this latter, this tube being open at both ends (431a, 431b) and such as to communicate via two ducts (432, 433) formed in the opposite lateral walls (434a, 434b) of the half-shell with the duct (403) provided between the coupling flanges (401a, 402a) of the half-shells, one of the ends of this tube being intended to be connected to a device for injecting under pressure and the other end of this tube being intended to be closed by a seal plug.

19. Sleeve in accordance with any one of claims 9 to 18, characterized in that the free end of the ribs (415a, 416a, 417) has a portion which is widened by means of ultrasonic radiation or the like.

**Patentansprüche**

1. Muffe zum Schutz des Spleisses von Kabeln, bestehend aus zwei Halbschalen (301, 302, 401, 402), die an ihren einander angrenzenden Rändern (301a, 302a, 401a, 402a) um die Spleißstelle herum zusammengefügt sind, wobei diese aneinander angrenzenden Ränder eine in der Montagestellung einen Kanal (303, 403) bildende Nut aufweisen und Mittel vorgesehen sind, um in diesen Kanal ein die Dichtheit zwischen den einander angrenzenden Rändern herstellendes pastöses Material einzuführen, und wobei die entgegengesetzten Enden der Muffe Backen (304a, 304b ; 305a, 305b ; 306a, 306b ; 307a, 307b ; 404a, 404b, 405a, 405b) besitzen, die dazu bestimmt sind, beim Zusammenbau der beiden Halbschalen über das Kabel (300, 400) geklemmt zu werden, und von denen mindestens zwei zwischen sich eine Kammer (313, 413) bilden, die mit dem genannten Kanal in Verbindung steht, dadurch gekennzeichnet, daß die Kammer (313, 413) mit dem Kanal (303, 304) über eine rund um eine Backe (306a, 306b) vorgesehene Nut (314) in Verbindung steht, welche an diese Kammer angrenzt und im Boden der Aufnahme (312a, 312b) ausgespart ist, in welcher diese Backe aufgenommen ist.

2. Muffe nach Anspruch 1, dadurch gekennzeichnet, daß die Nut (314) mit dem zwischen den einander angrenzenden Rändern der Halbschalen gebildeten Kanal (303) über zwei quer zu dem Kanal verlaufende Durchlässe (315a, 315b) verbunden ist, die an den entgegengesetzten Rändern (301a, 302a) der Halbschalen neben der Aufnahme (312a, 312b), in der die Backe (306a, 306b) aufgenommen ist, ausgespart sind.

3. Muffe nach Anspruch 1 oder 2, wobei jede Klemmbacke für das Kabel (300) zwei Backenelemente (306a, 306b) besitzt, die um das Kabel (300) herum ineinandergreifen, und jedes Backenelement eine Reihe von Rillen (320a ... 326a ; 320b ... 326b) aufweist, die sich längs konzentrischer Kreisbögen erstrecken, die verschiedenen Kabeldurchmessern angepaßt sind, dadurch gekennzeichnet, daß der Rand des einen (306a) der Backenelemente, welcher dazu bestimmt ist, in den angrenzenden Rand des anderen Backenelementes (306b) eingefügt zu werden, zwei geradlinige gleich lange Teile besitzt, von denen der eine (331a, 330b) ein konvexes Profil und der andere (330a, 331b) ein konkaves Profil aufweist und die dazu bestimmt sind, das konkave bzw. konvexe Profil der entsprechenden Teile des Randes des anderen Backenelementes aufzunehmen.

4. Muffe nach Anspruch 3, dadurch gekennzeichnet, daß das konvexe Profil (331a, 330b) von einem vom Backenelement heraustretenden Dieder und das konkave Profil (330a, 331b) von einem komplementären zurückspringenden Dieder gebildet ist.

5. Muffe nach irgendeinem der Ansprüche 2 bis 4, dadurch gekennzeichnet, daß die benachbarten Ränder der Backenelemente (306a, 306b) aneinandergeklebt sind.

6. Muffe nach irgendeinem der Ansprüche 3 bis 5, dadurch gekennzeichnet, daß die Ränder der Backenelemente (306a, 306b) querverlaufende Kerben (350a, 350b) aufweisen, die durch Vorsprünge (352a, 352b) gleicher Breite wie die Kerben voneinander getrennt sind, wobei die einander gegenüberliegenden vorspringenden Ränder dieser Kerben in der Verlängerung zweier kreisbogenförmiger, durch eine oder mehrere weitere Rillen getrennter Rillen (320a, 320b) angeordnet sind.

7. Muffe nach irgendeinem der Ansprüche 2 bis 6, dadurch gekennzeichnet, daß die die Böden der Rillen (320a ... 326a ; 320b ... 326b) bildenden Trennwände (361a, 361b) in einer Entfernung von den entgegengesetzten Seiten der Backenelemente (306a, 306b) liegen, die aufeinanderfolgend klein und groß in bezug auf eine dieser Seiten ist.

8. Muffe zum Schutz des Spleisses von Kabeln, nach einem der Ansprüche 1 bis 7, dadurch gekennzeichnet, daß die aneinander angrenzenden Ränder (401a, 402a) der Halbschalen (401, 402) sowie auch die Kammer (413) erhabene Abschnitte (415a, 416a, 417) aufweisen, die durch vertiefte Abschnitte von einander getrennt sind, welche dazu bestimmt sind mit dem pastösen Dichtmaterial gefüllt zu werden.

9. Muffe nach Anspruch 8, dadurch gekennzeichnet, daß die genannten erhabenen Abschnitte an den genannten Rändern (401a, 402a) und an der Innenfläche der genannten Kammer (413) angeformte Rippen (415a, 416a, 417) sind.

10. Muffe nach Anspruch 8 oder 9, dadurch gekennzeichnet, daß die aneinander angrenzenden Ränder (401a, 402a) der Halbschalen (401, 402) Mittel zur Schnappverbindung besitzen.

11. Muffe nach Anspruch 10, dadurch gekennzeichnet, daß die genannten Mittel an dem Rand (402a) der einen der Halbschalen eine Reihe von von der Halbschale (402) in einer im wesentlichen zur Montageebene der beiden Halbschalen (401, 402) parallelen Richtung nach außen vorspringenden Rastnasen (418) und an dem Rand (401a) der anderen Halbschale eine in bezug auf die Montageebene in einer im wesentlichen senkrechten Richtung vorspringende flexible Wand (419) umfassen, wobei diese flexible Wand (419) zur Aufnahme der Rastnasen (418) bestimmte Öffnungen (420) besitzt.

12. Muffe nach Anspruch 11, dadurch gekennzeichnet, daß die Rastnasen (418) einen eine Eingriffsrampe bildenden Abschnitt (418a) besitzen, der beim Zusammenbau der beiden Halbschalen eine allmähliche Biegung der flexiblen Wand (419) nach außen erlaubt, bevor diese Nasen (418) in die Öffnungen (420) dieser Wand (419) einschnappen.

13. Muffe nach Anspruch 11 oder 12, dadurch gekennzeichnet, daß der Rand (401a) der die flexible Wand (419) aufweisenden Halbschale (401) zwei parallele Rillen (421, 422) besitzt, die durch einen Vorsprung (423) voneinander getrennt sind, dessen Scheitel die genannten Rippen (415a) trägt, und daß der Rand (402) der anderen Halbschale beiderseits der zur Aufnahme des Vorsprunges (423) des anderen Randes bestimmten Nut (403) zwei parallele Lippen (424, 425) besitzt, die zu den Querschnitten der an dem ersten Rand (401a) ausgesparten Rillen (421, 422) komplementäre Querschnitte aufweisen und dazu bestimmt sind, in diese Rillen einzudringen.

14. Muffe nach Anspruch 13, dadurch gekennzeichnet, daß die Innenfläche (419a) der flexiblen Wand (419) in der Verlängerung der äußeren Seitenwand (424a) der angrenzenden Rille (424) liegt.

15. Muffe nach irgendeinem der Ansprüche 10 bis 14, dadurch gekennzeichnet, daß die Mittel zur Schnappverbindung an zwei aneinander angrenzenden Rändern der Halbschalen angebracht sind und daß die beiden anderen Ränder über einen einstückig mit den beiden Halbschalen geformten und ein Scharnier für diese bildenden Streifen aus Kunststoffmaterial verbunden sind.

16. Muffe nach einem der Ansprüche 8 bis 15, dadurch gekennzeichnet, daß die zwischen zwei Backen enthaltene und zur Auffüllung mit dem Dichtmaterial bestimmte Kammer (413) mit einem an der Außenfläche der einen der Halbschalen eine Ausbauchung (427) bildenden Hohlraum (426) in Verbindung steht.

17. Muffe nach Anspruch 16, dadurch gekennzeichnet, daß dieser Hohlraum (426) gegen den Boden (429) dieses Hohlraumes konvergierende Seitenwände (428) aufweist und der Boden ein Ventil (430) enthält.

18. Muffe nach einem der vorhergehenden Ansprüche, dadurch gekennzeichnet, daß die Mittel zum Einspritzen des Dichtmaterials ein sich ausserhalb der und über die ganze Breite einer Halbschale (401) erstreckendes und mit letzterer einstückiges Anschlußrohr (431) aufweist, das an seinen beiden Enden (431a, 431b) offen ist und über zwei in den einander gegenüberliegenden Seitenwänden (434a, 434b) der Halbschale ausgesparte Kanäle (432, 433) mit dem zwischen den Verbindungsrändern (401a, 402a) der Halbschalen vorgesehenen Kanal (403) in Verbindung steht, wobei eines der Enden dieses Anschlußrohres für den Anschluß an eine Druckeinspritzvorrichtung bestimmt ist und das andere Ende dieses Anschlußrohres dazu bestimmt ist, mit einem Stopfen verschlossen zu werden.

19. Muffe nach irgendeinem der Ansprüche 9 bis 18, dadurch gekennzeichnet, daß das freie Ende der Rippen (415a, 416a, 417) einen mittels Ultraschall od. dgl. verbreiterten Teil aufweist.

FIG_1

302   302a   303

310a

315a

312a   311a

318

317

316

313

303

315b

0 098 765

FIG. 2

0 098 765

FIG. 3

2

0 098 765

FIG.4

FIG.5

FIG.7

FIG.6

3

FIG. 8

FIG. 9

FIG. 10

0 098 765

FIG. 11

FIG. 13

FIG. 12

431b    431    434b    434a    431a

401
433
419
402a
401a    403

432
400
403
402

401    404a

423    425
424
419
420
401a
XVI
418
403
402a

422
421
415a
416a

414    404b
400
402

0 098 765

FIG. 14

430

428    427    429    426

401

402a

435

435

401a

400    402

FIG. 15

401    405a    400    438

436

402a

437

401a

402    410b    405b

0 098 765

FIG. 16

FIG. 17

419

424 424a

421

419

424a

421

420

422

420

422

418a

425

423

418

403

415a

423

418

403

416a

415a

419a

419a 418

416a

401

402

401

402

F

0 098 765

FIG.18